# EUROPEAN PATENT APPLICATION

(11) **EP 2 979 741 A1**
(43) Date of publication of application: **03.02.2016**
(21) Application number: 14773655.7
(22) Date of filing: 31.03.2014
(51) Int. Cl.: B01D 39/20, B01D 53/86, B01J 21/06, B01J 37/34

(54) **NANOCATALYST FILTER AND PRODUCTION METHOD FOR SAME**

(30) Priority: 29.03.2013 KR 20130034022
(71) Applicant: Korea University Research and Business Foundation, Seoul 136-713 (KR)
(72) Inventor: KIM, Young Keun, Seoul 135-906 (KR); KIM, Su-Hyo, Seoul 120-810 (KR)
(74) Representative: Eisenführ Speiser
(86) International application number: PCT/KR2014/002729
(87) International publication number: WO 2014/158009

(57) **Abstract**

Provided is a method of manufacturing a nano-catalyst filter, which includes depositing through electrodeposition a catalyst precursor inside a porous filter to which an electrode layer is attached. Using this method, a nano-catalyst can be uniformly deposited inside a porous ceramic filter, and high catalyst efficiency can be obtained only using a small amount of the nano-catalyst.

## Description

### [Technical Field]

The present invention relates to a method of manufacturing a nano-catalyst filter and a nano-catalyst filter manufactured thereby.

### [Background Art]

As the technology related to industrial structure has advanced, the amount of high-temperature exhaust emissions generated from automotive engines, ships, thermoelectric power plants, incinerators and various industries is greatly increasing. These exhaust emissions contain a significant amount of harmful gases such as nitrogen oxide (NOx), sulfur oxide (SOx), and a volatile organic compound (VOC), in addition to fine dust that is harmful to a human body, and thereby serious issues related to environmental pollution are being caused.

Various exhaust gas denitrification technologies have been widely studied for over 30 years throughout the world. Among these technologies, selective catalytic reduction (SCR) has been practically utilized as it is the most effective technology, and a method of simultaneously treating dust and harmful gases by providing a harmful gas removal property to a ceramic filter for collecting dust has been used to save operation cost and space.

As a catalyst for removing NOx, various catalysts including vanadium oxide, zeolite, iron oxide, activated carbon, platinum, palladium, etc. are used. As a method of coating a catalyst on a ceramic filter, dip coating or wash coating is generally used.

Specifically, according to Korean Patent Publication No. 10-2009-0065568, a reduction catalyst is manufactured by a method of dip coating a disc-type ceramic filter with a catalyst, and according to Korean Patent Publication No. 10-2007-0075044, a reduction catalyst is manufactured using a wash coating method, which is a method of spraying a catalyst on a cordierite honeycomb filter.

When applied to a filter having been studied for simultaneously treating dust and harmful gases, for example, a disc- type filter, it has been revealed that dip coating or wash coating is difficult to uniformly deposit a catalyst in the filter.

### [Disclosure]

### [Technical Problem]

The present invention is directed to simply and effectively depositing a nano-catalyst in a filter using electrodeposition to uniformly deposit a nano-catalyst in a porous filter. In addition, the present invention is directed to utilizing a large specific area of a nanostructure, thereby maximizing a catalyst's contact area with a gas, and ultimately improving a catalytic property.

### [Technical Solution]

The present invention provides a method of manufacturing a nano-catalyst filter, wherein the method includes forming a nano-catalyst by electrodeposition of a nano-catalyst precursor inside a porous filter.

In addition, the present invention provides a nano-catalyst filter manufactured by the method of manufacturing a nano-catalyst filter as described above. The nano-catalyst filter includes a porous filter and a nano-catalyst formed in the porous filter.

### [Advantageous Effects]

As a nano-catalyst filter according to the present invention is manufactured through electrodeposition, a nano-catalyst can be deposited in a porous filter, and high catalyst efficiency can be obtained only with a small amount of the catalyst.

### [Description of Drawings]

FIG. 1 is a schematic diagram illustrating a method of manufacturing a filter according to an exemplary embodiment of the present invention.
FIG. 2 is an image of a disc-type cordierite filter used in Example 1 of the present invention.
FIG. 3 is a graph showing an X-ray diffraction pattern of the nano-catalyst filter manufactured according to Example 1 of the present invention.
FIG. 4 is a scanning electron microscope (SEM) image of the nano-catalyst filter manufactured according to Example 1 of the present invention.
FIG. 5 is an SEM image of a nano-catalyst filter manufactured after electrodeposition according to Example 1 of the present invention.
FIG. 6 is an SEM image of a nano-catalyst filter manufactured by performing electrodeposition and calcination (heat treatment) according to Example 1 of the present invention.
FIG. 7 is a graph showing NOx removal efficiency of the nano-catalyst filter manufactured according to Example 1 of the present invention.
FIG. 8 is an image of a honeycomb-type ceramic filter used in Example 2 of the present invention.
FIG. 9 is an image of a nano-catalyst filter manufactured according to Example 2 of the present invention.
FIG. 10 is an SEM image of the nano-catalyst filter manufactured according to Example 2 of the present invention.
FIG. 11 is a graph showing NOx removal efficiency of the nano-catalyst filter manufactured according to Example 2 of the present invention.
FIG. 12 is a transmission electron microscope (TEM) image of a nano-catalyst filter manufactured according to Example 3 of the present invention.
FIG. 13 is a graph of a CeO₂ X-ray diffraction pattern of the nano-catalyst filter manufactured according to Example 3 of the present invention.
FIG. 14 is a graph showing NOx removal efficiency of the nano-catalyst filter manufactured according to Example 3 of the present invention.

### [Best Mode]

The present invention relates to a method of manufacturing a nano-catalyst filter, wherein the method includes forming a nano-catalyst by electrodeposition of a nano-catalyst precursor inside a porous filter.

Hereinafter, the method of manufacturing a nano-catalyst filter according to the present invention will be described in further detail.

In the present invention, the nano-catalyst filter refers to a filter in which a nano-catalyst is formed in an inner pore of a porous filter.

In the present invention, the porous filter has a porous structure in the filter.

Such a porous filter may have a porosity of 40% or less, preferably, 30% or less, a strength of 10 MPa or more, preferably, 20 MPa or more, and a pressure loss of 3000 Pa or less, preferably, 2000 Pa or less at a face velocity of 5 cm/sec. Here, the porosity is measured by the Archimedes method, the strength is measured using a universal testing machine (UTM), and the pressure loss is measured using a manometer.

The porous filter serves as a carrier, and a nano-catalyst is formed by electrodeposition, and thereby the filter has an excellent effect of treating a harmful gas, specifically, an effect of removing nitrogen oxides.

A material such a porous filter is not particularly limited, and may include at least one selected from the group consisting of alumina (Al₂O₃), silica, mullite (3Al₂O₃.SiO₂), zeolite, zirconia (ZrO₂), titanium dioxide (TiO₂), silicon carbide (SiC) and cordierite (2MgO₂.Al₂O₃. Si02), and preferably, cordierite.

In addition, a type of the porous filter may be, but is not particularly limited to, a disc type or a honeycomb type porous filter.

In addition, the nano-catalyst originates from a nano-catalyst precursor and is formed in a porous filter by electrodeposition. A material such a nano-catalyst is not particularly limited, and may include at least one selected from the group consisting of a metal oxide, a transition metal, a noble metal or a rare earth metal. Specifically, the metal oxide may be titanium oxide (TiO₂), cerium oxide (CeO₂), zirconium oxide (ZrO₂), magnesium oxide (MgO), copper oxide (CuO), tungsten oxide (WO₃), nickel oxide (NiOₓ), cobalt oxide (CoOₓ), manganese oxide (MnOₓ), vanadium oxide (VOₓ), iron oxide (FeOₓ), gallium oxide (GaOₓ), cesium oxide (SeOₓ) or molybdenum oxide (MoOₓ); the transition metal may be scandium (Sc), titanium (Ti), chromium (Cr), manganese (Mn), iron (Fe), cobalt (Co), nickel (Ni), zirconium (Zr), niobium (Nb), molybdenum (Mo), technetium (Tc), lead (Pb), bismuth (Bi), germanium (Ge) or zinc (Zn); the noble metal may be silver (Ag), gold (Au), platinum (Pt), ruthenium (Ru), rhodium (Rh), palladium (Pd), osmium (Os) or iridium (Ir); and the rare earth metal may be lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), scandium (Sc) or yttrium (Y).

In the present invention, the nano-catalyst precursor is a compound deposited inside the ceramic filter in the form of a nano-catalyst through electrodeposition.

A type of such a nano-catalyst precursor is not particularly limited, and may include at least one selected from the group consisting of a metal oxide precursor, a transition metal precursor, a noble metal precursor and a rare earth metal precursor.

Here, types of the metal oxide precursor, the transition metal precursor, the noble metal precursor and the rare earth metal precursor are not particularly limited, as long as the above-described metal oxide, transition metal, noble metal and rare earth metal can be present in an ionized state in an electrolyte solution. In the present invention, specifically, as the catalyst precursor, NH₄VO₃ or Ce(NO₃)₃. 6H₂O may be used.

In the present invention, the formation of the nano-catalyst inside the porous filter may be performed using electrodeposition.

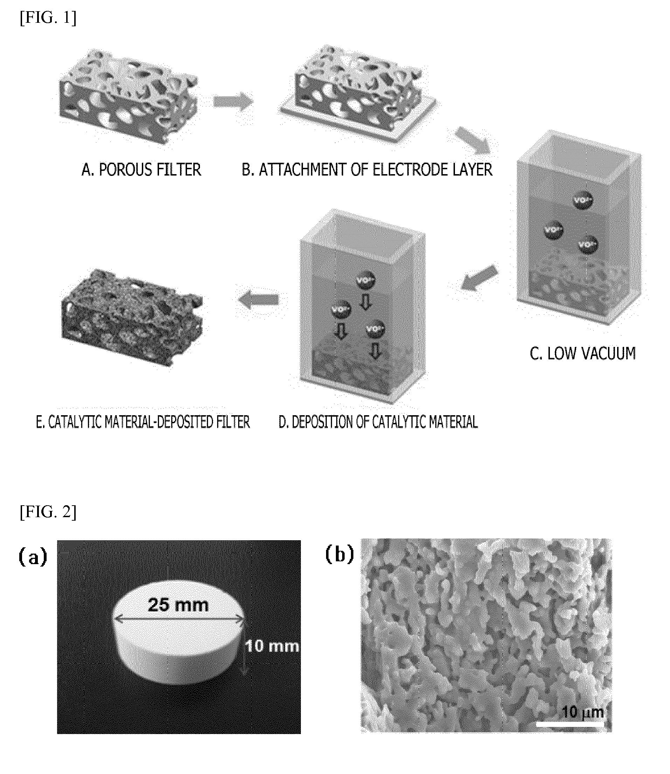

For example, the manufacture of the nano-catalyst filter using electrodeposition may be performed using a method illustrated in FIG. 1. The manufacture of the nano-catalyst filter according to FIG. 1 may be performed by first attaching an electrode layer to a porous filter, dipping the porous filter to which the electrode layer is attached into a plating bath filled with an electrolyte solution containing a catalyst precursor, and performing electrodeposition.

Specifically, the nano-catalyst filter may be manufactured by dipping the porous filter (the porous filter to which the electrode layer is attached) into the plating bath filled with the electrolyte solution containing the nano-catalyst precursor and decompressing the plating bath; and performing electrodeposition. The nano-catalyst may be deposited inside the porous filter through the method described above.

Here, a concentration of the nano-catalyst precursor in the electrolyte solution may be, but is not particularly limited to, 0.01 to 30 M(mole), preferably, 0.03 to 10 M, and more preferably, 0.05 to 5 M. Within this range, it is easy to uniformly deposit a nano-catalyst onto the porous filter.

A pH of the electrolyte solution may be maintained at 1 to 5 for the nano-catalyst precursor to be present as ions, and particularly, cations. To maintain the pH of the electrolyte solution within this range, the electrolyte solution may contain an acidic solution. Here, as the acidic solution, nitric acid, sulfuric acid, hydrochloric acid, boric acid, oxalic acid, acetic acid, phosphoric acid or a mixture thereof may be used.

In the present invention, decompression may be performed to remove air in the porous filter, thereby facilitating the nano-catalyst formation.

The decompression may be performed in a low vacuum or a vacuum, and a pressure range may be 100 kPa to 100 mPa, and preferably, 500 kPa to 50 mPa. In addition, the decompression may be performed for 10 minutes to 5 hours, and preferably, for 30 minutes to 3 hours.

In the present invention, electrodeposition may be performed in a current range of 0.1 to 300 mA/cm², and preferably, 1 to 40 mA/cm². In this current range, it is easy to uniformly deposit the nano-catalyst precursor. In addition, electrodeposition may be performed for 10 minutes to 48 hours, and preferably 3 to 24 hours. The time may vary according to a size or height of the porous filter, and in the above-described range of time, it is easy to uniformly deposit the nano-catalyst precursor.

In the present invention, after the electrodeposition is performed, a calcination (heat treatment) operation may be additionally included. An efficiency of the catalyst may be maximized further by the calcination.

Here, calcination may be generally performed at 100 to 1000°C, although the temperature may vary depending on the type of the nano-catalyst precursor and is not particularly limited thereto. The calcination may be performed for 1 to 24 hours, and preferably, 3 to 20 hours. In this range, a filter having excellent catalytic activity may be easily manufactured.

In addition, the present invention relates to a nano-catalyst filter manufactured by the above-described method of manufacturing the nano-catalyst filter.

The nano-catalyst filter according to the present invention may include a porous filter; and a nano-catalyst formed in the porous filter.

In the present invention, the type of the nano-catalyst is not particularly limited, and may include at least one selected from the group consisting of a metal oxide, a transition metal, a noble metal and a rare earth metal. Specifically, the metal oxide may be titanium oxide (TiO₂), cerium oxide (CeO₂), zirconium oxide (ZrO₂), magnesium oxide (MgO), copper oxide (CuO), tungsten oxide (WO₃), nickel oxide (NiOₓ), cobalt oxide (CoOₓ), manganese oxide (MnOₓ), vanadium oxide (VOₓ), iron oxide (FeOₓ), gallium oxide (GaOₓ), selenium oxide (SeOₓ) or molybdenum oxide (MoOₓ); the transition metal may be scandium (Sc), titanium (Ti), chromium (Cr), manganese (Mn), iron (Fe), cobalt (Co), nickel(Ni), zirconium (Zr), niobium (Nb), molybdenum (Mo), technetium (Tc), lead (Pb), bismuth (Bi), germanium (Ge) or zinc (Zn); the noble metal may be silver (Ag), gold (Au), platinum (Pt), ruthenium (Ru), rhodium (Rh), palladium (Pd), osmium (Os) or iridium (Ir); and the rare earth metal may be lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), scandium (Sc) or yttrium (Y).

In the present invention, the structure of the nano-catalyst formed in the porous filter is not particularly limited, and may have, for example, a nano-wire or nano-particle structure. Here, when the nano-catalyst has the nano-particle structure, an average particle size may be 1000 nm or less, particularly 500 nm or less, 100 nm or less, or 5 nm or less, and the lower limit of the average particle size may be 1 nm or more.

### [Mode for Invention]

The present invention will become more apparent by reference to exemplary embodiments in which advantages and characteristics of the present invention, and methods of accomplishing the same are described in detail. However, the present invention is not limited to the following examples, but will be realized in various formations. The examples are merely provided to complete the disclosure of the present invention and to fully inform in regards to the scope of the present invention to those of ordinary skill in the art, and defined by the range of the claims of the present invention.

### Example 1: Synthesis of VOx on disc-type filter

As a porous filter, cordierite (2MgO₂.Al₂O₃.SiO₂) was used. The ceramic filter was attached to a platinum (Pt) electrode plate, and then dipped into a plating bath. Here, a plating bath was filled with an electrolyte solution containing ammonium vanadate (NH₄VO₃ 116.99 g/mol) at a concentration of 0.05 M, and nitric acid (HNO₃) was added to the electrolyte solution to adjust a pH to the range of 1.2 to 2.5.

To remove air in the porous filter, an inner pressure of the plating bath was reduced to 86 kPa using a low vacuum pump for 20 minutes before the electrodepositing was performed.

For the electrodeposition, a current of 20 mA/cm² was applied, and a cordierite filter deposited with a VOₓ nano-catalyst was manufactured.

The manufactured filter was calcinated at 600°C for 1 hour.

In the present invention, FIG. 2 is an image of a cordierite filter used in Example 1. FIG. 2(a) is an external image of the filter, and as shown in FIG. 2(a), a cordierite filter having a diameter of 25 mm and a height of 10 mm was used in Example 1 of the present invention. In addition, FIG. 2(b) is an SEM image of an interior of the filter, and as shown in FIG. 2(b), it can be confirmed that pores having several micrometers or more were relatively uniformly formed in the cordierite filter.

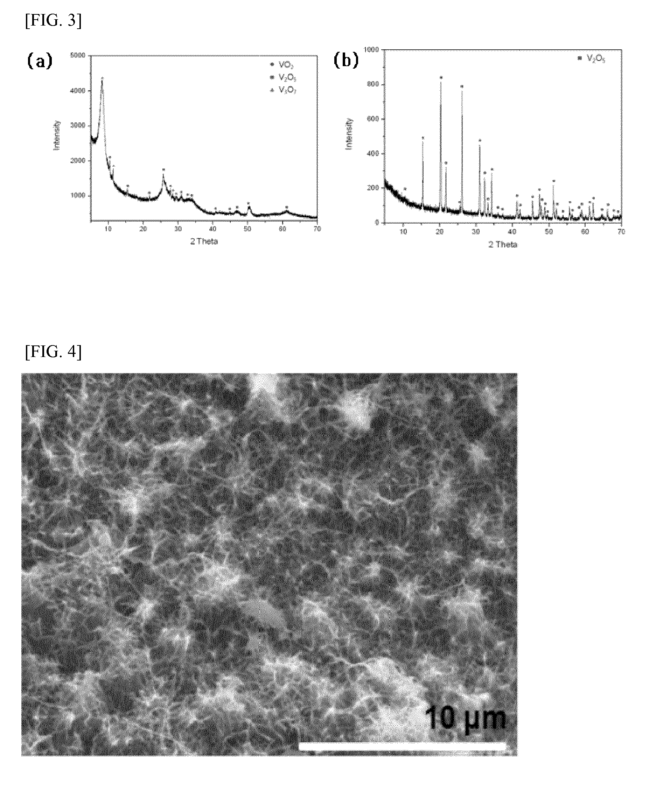

FIG. 3 is a graph of an X-ray diffraction pattern of the nano-catalyst filter manufactured according to Example 1 of the present invention, and specifically, FIG. 3(a) is a graph of an X-ray diffraction pattern of a filter manufactured after electrodeposition, and FIG. 3(b) is a graph of an X-ray diffraction pattern of the filter manufactured by electrodeposition and then calcination (heat treatment) at 600°C. As shown in FIG. 3, (a) it can be confirmed that vanadium oxide (VOₓ) crystals were formed after the electrodeposition, and (b) it can be confirmed that vanadium pentoxide (V₂O₅) crystals were formed after calcination.

FIG. 4 is an SEM image of a nano-catalyst microstructure manufactured according to Example 1 of the present invention. As shown in FIG. 4, it can be confirmed that the nano-catalyst is formed in a nano-fiber structure having a specific large surface area.

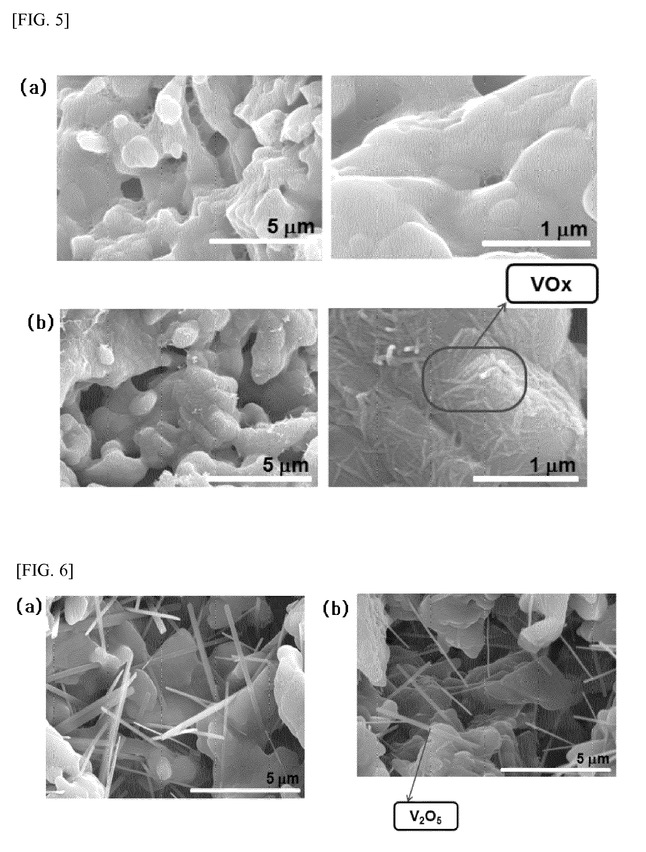

FIG. 5 is an SEM image of the nano-catalyst filter manufactured after electrodeposition in Example 1. Specifically, FIG. 5(a) is an SEM image of a surface of the filter, and FIG. 5(b) is an SEM image of an interior of the filter, and it can be confirmed from FIG. 5 that VOₓ is deposited well on the surface and interior of the filter.

FIG. 6 is an SEM image of a nano-catalyst filter manufactured by electrodeposition and then calcination (heat treatment) as in Example 1 of the present invention. Specifically, FIG. 6(a) is an SEM image of a surface of the filter, and FIG. 6(b) is an SEM image of an interior of the filter, and it can be confirmed from FIG. 6 that V₂O₅ is deposited into a nano-wire structure inside pores of the filter.

Referring to Table 1, it can be confirmed from X-ray fluorescence (XRF) analysis data for the nano-catalyst filter manufactured according to Example 1 that a VOx nano-catalyst was deposited at a concentration of 10 wt% or more.

**[Table 1]**

| Material | MgO | Al₂O₃ | SiO₂ | VOx | Etc. |
|---|---|---|---|---|---|
| As-deposition | 8.05 | 29.8 | 48.6 | 10.5 | 3.05 |
| heat treatment at 600°C | 7.91 | 29.2 | 47.5 | 12.3 | 3.09 |

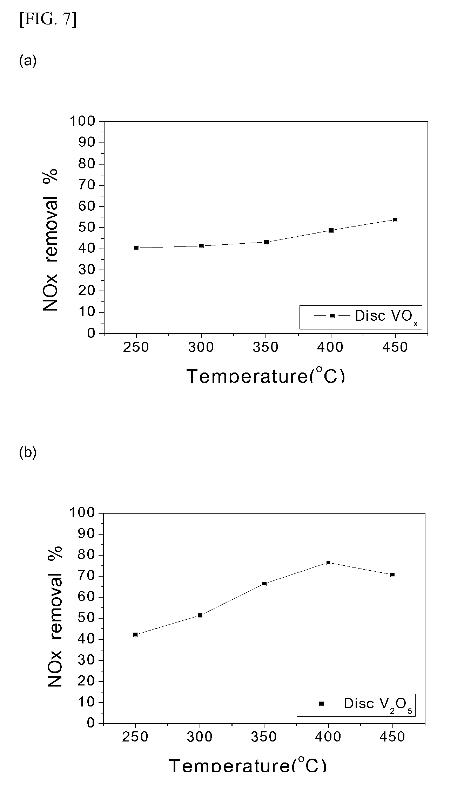

In addition, FIG. 7 is a graph showing NOₓ removal efficiency of the nano-catalyst filter manufactured according to Example 1 of the present invention. More specifically, FIG. 7(a) is a graph showing the NOₓ removal efficiency of the nano-catalyst filter after the electrodeposition was performed, and FIG. 7(b) is a graph showing the NOₓ removal efficiency of the nano-catalyst filter after both electrodeposition and calcination (heat treatment) were performed. As shown in FIG. 7, it can be confirmed that the NOₓ removal efficiency is 53% maximum before calcination and 76% maximum after calcination, and that NOₓ removal efficiency after calcination is excellent.

### Example 2: VOx synthesis on a honeycomb-type filter

A filter was manufactured by the same method as described in Example 1, except that a honeycomb-type ceramic filter was used as a porous filter.

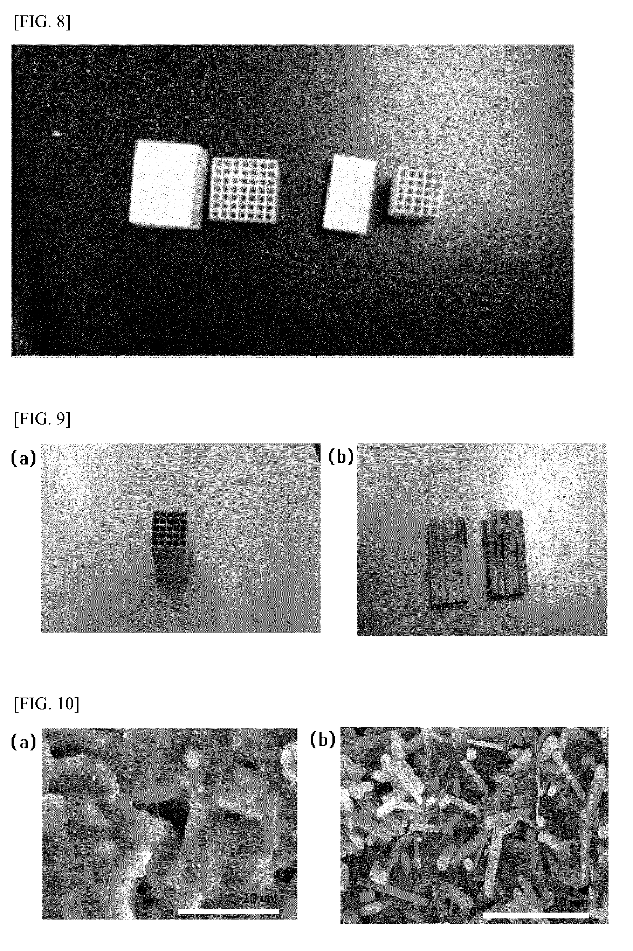

In the present invention, FIG. 8 is an image of a honeycomb-type porous filter used in Example 2 of the present invention.

FIG. 9 is an image of a nano-catalyst filter after electrodeposition by the method described in Example 2 of the present invention, and specifically, FIG. 9(a) is an external image of the manufactured filter, and FIG. 9(b) is an internal image of the filter.

FIG. 10 is an SEM image of the nano-catalyst filter manufactured according to Example 2, and specifically, FIG. 10(a) is an SEM image of the honeycomb-type ceramic filter after electrodeposition, and FIG. 10(b) is an SEM image of the honeycomb-type ceramic filter after electrodeposition and then calcination (heat treatment). As shown in FIG. 10(b), it can be confirmed that V₂O₅ is deposited in a nano-wire structure inside pores of the filter after calcination.

Referring to Table 2, it can be confirmed from X-ray fluorescence (XRF) analysis data of the nano-catalyst filter manufactured according to Example 2 of the present invention that a VOₓ nano-catalyst was deposited at a concentration of 14 wt% or more.

**[Table 2]**

| Material | MgO | Al₂O₃ | SiO₂ | VOₓ | Etc. |
|---|---|---|---|---|---|
| As-deposition | 7.71 | 27.3 | 46.0 | 14.0 | 4.99 |
| heat treatment at 600°C | 7.26 | 26.1 | 43.0 | 18.3 | 5.34 |

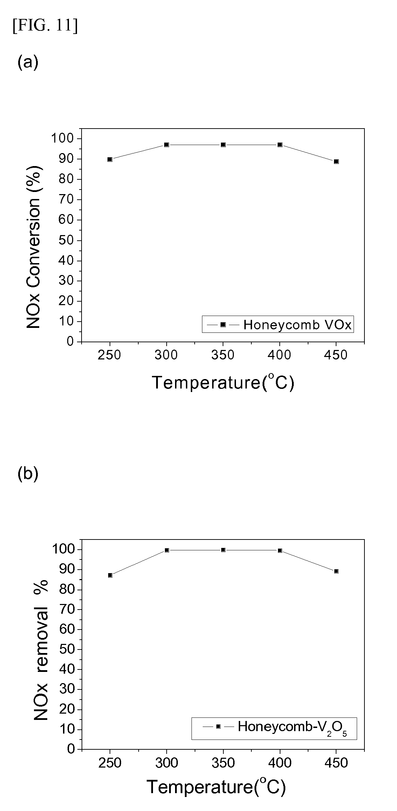

In addition, FIG. 11 is a graph showing NOₓ removal efficiency of the nano-catalyst filter manufactured according to Example 2 of the present invention, and specifically, FIG. 11(a) is a graph showing the NOₓ removal efficiency of the nano-catalyst filter after electrodeposition, and FIG. 11(b) is a graph showing the NOₓ removal efficiency of the nano-catalyst filter after electrodeposition and then calcination (heat treatment). As shown in FIG. 11, the NOₓ removal efficiency is 97% maximum before calcination, and 99% maximum after calcination.

### Example 3: CeO₂ synthesis on a disc-type filter

A disc-type filter was used as a porous filter. The filter was attached to an electrode plate and dipped into a plating bath. Here, the plating bath was filled with a cerium (III) nitrate hexahydrate(Ce(NO₃)₃.H₂O g/mol) electrolyte solution at a concentration of 1 M, to which nitric acid (HNO₃) was added to adjust a pH in the range of 1.2 to 3.5.

To remove air in the porous filter, pressure in the plating bath was reduced to 86 kPa using a low vacuum pump for 20 minutes before electrodeposition was performed.

For electrodeposition, a current of 10 mA/cm² was applied, and a CeO₂ nano-catalyst-deposited disc-type ceramic filter was manufactured.

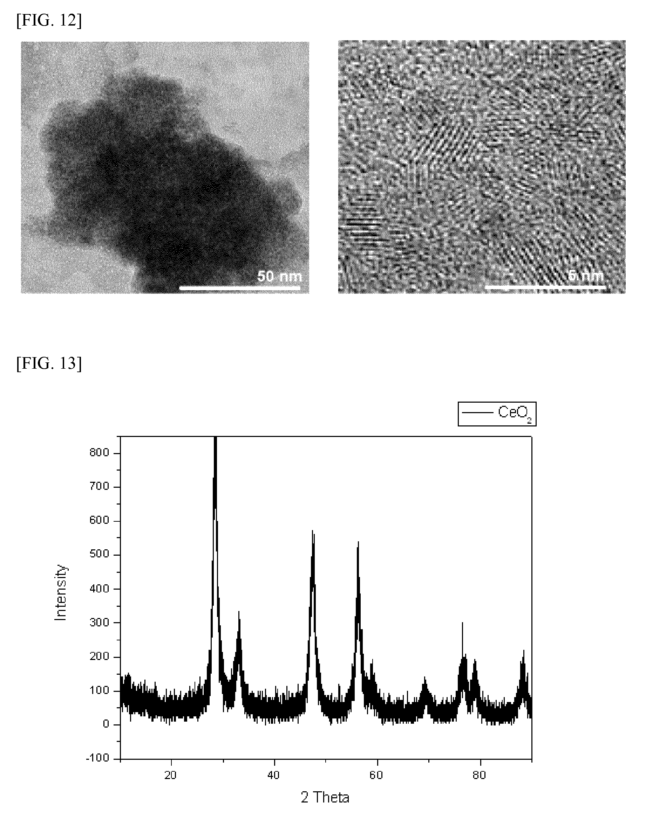

In the present invention, FIG. 12 is a TEM image of a nano-catalyst filter manufactured according to Example 3 of the present invention. As shown in FIG. 12, it can be confirmed that a nano-catalyst having a nano-particle structure with a diameter of 5 nm or less was formed inside the filter.

FIG. 13 is a graph of a CeO₂ X-ray diffraction pattern of the nano-catalyst filter manufactured according to Example 3, and referring to FIG. 13, it can be confirmed that cerium oxide was formed inside pores of the filter.

Referring to Table 3, it can be confirmed from XRF analysis data of the nano-catalyst filter manufactured according to Example 3 that a CeO₂ nano-catalyst was deposited at a concentration of 28 wt% or more.

**[Table 3]**

| Material | MgO | Al₂O₃ | SiO₂ | CeO₂ | Etc. |
|---|---|---|---|---|---|
| As-deposition | 6.85 | 24.8 | 36.8 | 28.8 | 2.75 |
| heat treatment at 500°C | 6.57 | 23.8 | 35.2 | 31.4 | 3.03 |

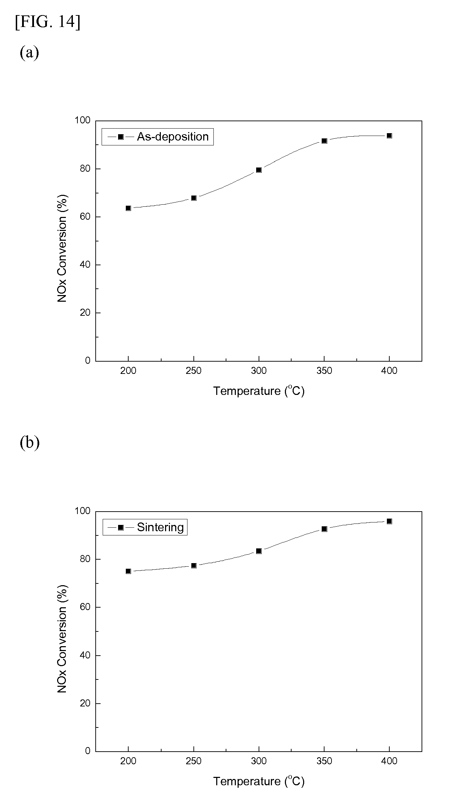

In addition, FIG. 14 is a graph showing NOₓ removal efficiency of the nano-catalyst filter manufactured according to Example 3 of the present invention, and specifically, FIG. 14(a) is a graph showing the NOₓ removal efficiency of the nano-catalyst filter after electrodeposition and FIG. 14(b) is a graph showing the NOₓ removal efficiency of the nano-catalyst filter after electrodeposition and then calcination (heat treatment). The NOₓ removal efficiency was measured at maximum 93% before calcination, and at maximum 95% after calcination.

### [Industrial Applicability]

A nano-catalyst filter according to the present invention can be used to remove a harmful gas (nitrogen oxides (NOx), etc.).

## Claims

1. A method of manufacturing a nano-catalyst filter, comprising:
forming a nano-catalyst by electrodeposition of a nano-catalyst precursor inside a porous filter.

2. The method of claim 1, wherein the porous filter is formed of a material selected from the group consisting of alumina, silica, mullite, zeolite, zirconia, titanium oxide, silicon carbide, and cordierite.

3. The method of claim 1, wherein the porous filter is formed as a disc type or a honeycomb type porous filter.

4. The method of claim 1, wherein the nano-catalyst is a material selected from the group consisting of a metal oxide, a transition metal, a noble metal, and a rare earth metal.

5. The method of claim 1, wherein the nano-catalyst precursor is selected from the group consisting of a metal oxide precursor, a transition metal precursor, a noble metal precursor, and a rare earth metal precursor.

6. The method of claim 1, comprising:
dipping the porous filter into a plating bath filled with an electrolyte solution containing the nano-catalyst precursor, and decompressing the plating bath; and
performing electrodeposition.

7. The method of claim 6, wherein a concentration of the nano-catalyst precursor is 0.01 to 30 M.

8. The method of claim 6, wherein the electrolyte solution has a pH of 1 to 5.

9. The method of claim 6, wherein the decompression is performed at a pressure of 100 kPa to 100 mPa.

10. The method of claim 6, wherein the decompression is performed for 10 minutes to 5 hours.

11. The method of claim 6, wherein the electrodeposition is performed at 0.1 to 300 mA/cm².

12. The method of claim 6, wherein the electrodeposition is performed for 10 minutes to 48 hours.

13. The method of claim 1, further comprising:
performing calcination at 50 to 1000°C for 1 to 24 hours after the electrodeposition.

14. A nano-catalyst filter manufactured by the method of manufacturing a nano-catalyst filter of claim 1, comprising:
a porous filter; and
a nano-catalyst formed inside the porous filter.
